(19) Europäisches Patentamt
European Patent Office
Office européen des brevets

(11) **EP 3 531 398 B1**

(12) **EUROPEAN PATENT SPECIFICATION**

(45) Date of publication and mention
of the grant of the patent:
**24.08.2022 Bulletin 2022/34**

(21) Application number: **18202467.9**

(22) Date of filing: **25.10.2018**

(51) International Patent Classification (IPC):
*G08G 1/16* *(2006.01)*     *B60W 30/18* *(2012.01)*
*B60W 50/14* *(2020.01)*    *B60W 30/095* *(2012.01)*
*B60W 40/09* *(2012.01)*    *G06N 20/00* *(2019.01)*

(52) Cooperative Patent Classification (CPC):
**B60W 30/0956; B60W 30/18163; B60W 40/09;**
**B60W 50/14; G06N 20/00; G08G 1/167;**
B60W 2050/143; B60W 2540/043; B60W 2554/00

(54) **REAR LATERAL SIDE WARNING APPARATUS AND METHOD WITH LEARNING OF DRIVING PATTERN**

HINTERE SEITLICHE WARNVORRICHTUNG UND VERFAHREN ZUM ERLERNEN EINES FAHRMUSTERS

APPAREIL ET PROCÉDÉ D'AVERTISSEMENT LATÉRAL ARRIÈRE COMPORTANT UN APPRENTISSAGE DU PROFIL DE CONDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2017 KR 20170140513**

(43) Date of publication of application:
**28.08.2019 Bulletin 2019/35**

(73) Proprietor: **Mando Mobility Solutions Corporation Pyeongtaek-si, Gyeonggi-do 17962 (KR)**

(72) Inventor: **CHOI, JongHwan**
**16875 Suji-gu, Yongin-si, Gyeonggi-do (KR)**

(74) Representative: **Pfenning, Meinig & Partner mbB Patent- und Rechtsanwälte Joachimsthaler Straße 10-12 10719 Berlin (DE)**

(56) References cited:
**US-A1- 2013 335 213     US-A1- 2016 009 295**

**Description**

CROSS REFERENCE TO RELATED APPLICATION

This application claims priority from Korean Patent Application No. 10-2017-0140513, filed on October 26, 2017.

BACKGROUND OF THE INVENTION

1. Field of the invention

The present disclosure relates to a rear lateral side warning apparatus and method adaptable to a driving pattern, and more particularly, to a rear lateral side warning apparatus and method that are adaptively controlled according to a driver by allowing a rear lateral side warning apparatus to learn the driver's driving pattern.

2. Description of the Prior Art

There is a risk of collision when a driver is not aware of the presence of the surrounding vehicles, but cannot be sure whether the lane change is safe, he or she cannot easily change the lane.

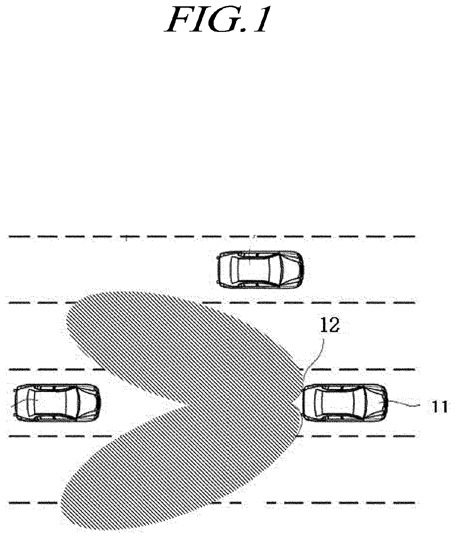

In the related art, in order to solve the above problem, a vehicle is equipped with a rear lateral side warning system. As shown in FIG. 1, the rear lateral side warning system is a technology capable of monitoring a rear lateral side detection region near a vehicle 11 using a detection sensor 12 installed in the vehicle 11 and of notifying driving condition information to a driver of the vehicle 11 when another vehicle is present in the detection region. US2013/335213 A1 concerns a lane departure warning/assistance system that warns the driver that the vehicle is about to leave a current lane and enter an adjacent lane. In US 2016/009295 A1, an on-vehicle situation detection apparatus and method is described. A determination unit may determine a safe driving state of a driver and a warning unit may warn the driver when the driver is determined to be not in the safe driving state.

In this case, the detection sensor 12 of the vehicle 11 includes a sensor for monitoring a blind spot detection (BSD) zone, a sensor for monitoring a lane change assist (LCA) zone, a sensor for monitoring a rear pre-crash (RPC) zone, etc.

Therefore, advantageously, conventional rear lateral side warning systems prevent accidents by collecting driving condition information from the detection sensor 12 and transferring a warning to the driver. However, drivers have their driving patterns while they change the lane, but a conventional rear lateral side warning system does not reflect general driving patterns of the drivers. This may cause some of the drivers to feel considerable inconvenience in operating the rear lateral side warning system.

That is, the conventional rear lateral side warning system may make drivers feel inconvenience because the system provides a predetermined motion to all the drivers on the same basis without considering their driving patterns.

For example, a conventional rear lateral side warning system having the same predetermined operation issues a warning to prevent driving even when a driver determines that he or she is not in danger. On the other hand, when the driver determines that he or she is in danger, the warning is not automatically issued, and thus the driver may feel discomfort.

SUMMARY OF THE INVENTION

The present invention provides a rear lateral side warning apparatus and method according to the independent claims, capable of learning a driving pattern.

It should be noted that objectives of the present invention are not limited to the above-described objectives, and other objectives that are not described herein will be apparent to those skilled in the art from the following descriptions.

According to an aspect of the present disclosure, there is provided a rear lateral side warning apparatus including the features of claim 1.

According to another aspect of the present disclosure, there is provided a rear lateral side warning method including the features of claim 6.

Further embodiments of the invention are defined by the dependent claims.

Although the invention is only defined by the claims, the below embodiments, examples and aspects are present for aiding in understanding the background and advantages of the invention.

Other specific details of the present disclosure are included in the detailed description and drawings.

BRIEF DESCRIPTION OF THE DRAWINGS

The above and other aspects, features and advantages of the present disclosure will be more apparent from the following detailed description taken in conjunction with the accompanying drawings, in which:

FIG. 1 is a view showing an example operation of a conventional rear lateral side warning system;
FIG. 2A is a block diagram showing a rear lateral side warning apparatus according to an embodiment of the invention of the present disclosure;
FIG. 2B is a block diagram showing a detection unit according to an embodiment of the invention of the present disclosure;
FIG. 2C is a block diagram showing a rear lateral side warning apparatus including a DCU according to an embodiment of the invention of the present disclosure;
FIG. 3 is a block diagram showing a control unit of the rear lateral side warning apparatus according to an embodiment of the invention of the present disclosure; and
FIG. 4 is a flowchart illustrating a rear lateral side warning method according to an embodiment of the invention of the present disclosure.

DETAILED DESCRIPTION OF THE EXEMPLARY EMBODIMENTS

Hereinafter, example embodiments of the invention of the present disclosure will be described in detail with reference to the accompanying drawings. Advantages and features of the invention of the present disclosure and methods of accomplishing the same will be apparent by referring to embodiments described below in detail in connection with the accompanying drawings. The the invention of present disclosure may, however, be embodied in different forms and should not be construed as limited to the embodiments set forth herein. Rather, these embodiments are provided so that the invention of this disclosure will be thorough and complete, and will fully convey the scope of the present invention to those skilled in the art. Therefore, the scope of the disclosure is defined only by the appended claims. Like reference numerals refer to like elements throughout.

It will be understood that, although the terms first, second etc. may be used herein to describe various elements, components, and/or sections, these elements, components, and/or sections should not be limited by these terms. These terms are only used to distinguish one element, component, or section from another element, component, or section. Thus, a first element, component, or section discussed below could be termed a second element, component, or section without departing from the teachings of the present disclosure.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "made of," when used in this specification, specify the presence of stated features, integers, steps, operations, elements, and/or components, but do not preclude the presence or addition of one or more other features, integers, steps, operations, elements, components, and/or groups thereof.

Hereinafter, the present disclosure will be described in detail with reference to the accompanying drawings.

FIG. 1 is a view showing an example operation of a conventional rear lateral side warning system.

As shown in FIG. 1, the rear lateral side warning system is a technology capable of monitoring a rear lateral side detection region near a vehicle 11 using a detection sensor 12 installed in the vehicle 11 and of notifying driving condition information to a driver of the vehicle 11 when another vehicle is present in the detection region.

In this specification, the rear lateral side warning system refers to a warning system for preventing an accident by collecting driving condition information from the detection sensor 12 and issuing a warning to the driver. In this case, the detection sensor 12 of the vehicle 11 includes a sensor for monitoring a BSD zone, a sensor for monitoring an LCA zone, a sensor for monitoring an RPC zone, etc., and may collect the driving condition information from the above-described sensors. Alternatively, the driving condition information may include information received from a vehicle-to-everything (V2X) communication device inside a navigation device or a vehicle or an external device located outside the vehicle such as a GPS module. That is, the driving condition information may be interpreted to include both of information generated by the vehicle itself and information generated and transmitted from the outside of the vehicle.

Also, a rear lateral side warning apparatus adaptable to driving patterns according to the present disclosure may be designed in a vehicle to which an intelligent safety system or an autonomous driving system (hereinafter referred to as an automatic steering control system) including a lane departure warning system (LDWS) and a lane keeping assist system (LKAS) is applied, such that automatic driving control is adaptively made depending on a driver.

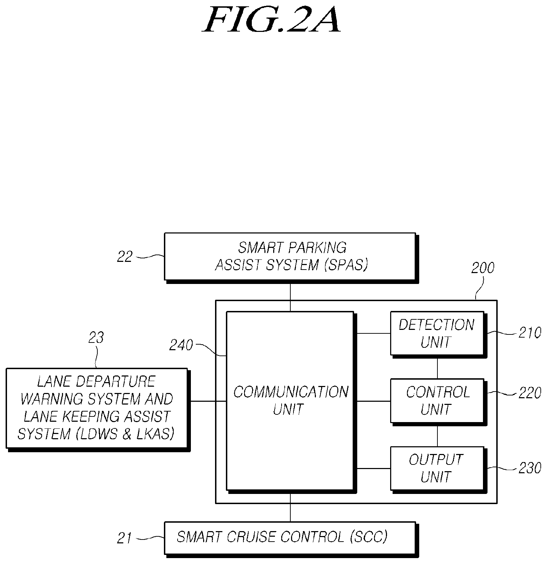

FIG. 2A is a block diagram showing a rear lateral side warning apparatus 200 according to an embodiment of the invention of the present disclosure.

Referring to FIG. 2A, the rear lateral side warning apparatus 200 according to the invention of the present disclosure includes a detection unit 210 configured to detect a driving condition of a vehicle and a driving state of the vehicle, a control unit 220 configured to learn a driving pattern on the basis of driving information regarding at least one of blind spot warnings, lane change warnings, and rear-end collision warnings which are accumulated in the vehicle, calculate a warning index obtained by assigning a weight to the driving information, and determine whether to generate a warning signal using the warning index, and an output unit 230 configured to output the warning signal against at least one of a bind spot, a lane change, and a rear-end collision of the vehicle.

Also, the rear lateral side warning apparatus 200 may further include a communication unit 240 configured to receive the driving information and driver identification information from a sensor installed in the vehicle and transmit the warning signal to a control device of the vehicle.

In detail, the detection unit 210 functions to detect driving conditions for a rear lateral region and a front region with respect to the vehicle and may include an image sensor disposed in the vehicle to provide visibility to the outside of the vehicle and configured to capture image data and a processor configured to process the image data captured by the image sensor. At last one image sensor may be installed at each part of the vehicle to provide visibility to a front region, a lateral region, or a rear region with respect to the vehicle. According to an example, the image sensor and the processor may be implemented as a single camera sensor.

Image information imaged by the image sensor is composed of image data and thus refers to image data captured by the image sensor. Hereinafter, image information imaged by an image sensor refers to image data captured by the image sensor. The image data captured by the image sensor may be generated in a format selected from among, for example, Audio-Video Interleave (AVI) Raw, Moving Picture Experts Group (MPEG)-4, H.264, and Joint Photographic Experts Grou (JPEG). The image data captured by the image sensor may be processed by the processor.

Also, the image sensor is disposed in the vehicle to provide visibility to the outside of the vehicle and be configured to capture image data. The image data captured by the image sensor is processed by the processor and used to detect a driving condition of the vehicle and a driving state of the vehicle. The driving condition of the vehicle and the driving state of the vehicle are used to acquire driving information regarding at least one of blind spot warnings, lane change warnings, and rear-end collision warnings which are accumulated in the vehicle. The driving information are used to learn a driver's driving pattern, calculate a warning index obtained by assigning a weight to the driving information, and determine whether to generate a warning signal using the warning index.

The processor is operable to process the image data captured by the image sensor. The processor may be implemented using at least one electrical unit capable of processing image data or performing other functions, such as application specific integrated circuits (ASICs), digital signal processors (DSPs), digital signal processing devices (DSPDs), programmable logic devices (PLDs), field programmable gate arrays (FPGAs), processors, controllers, microcontrollers, and microprocessors.

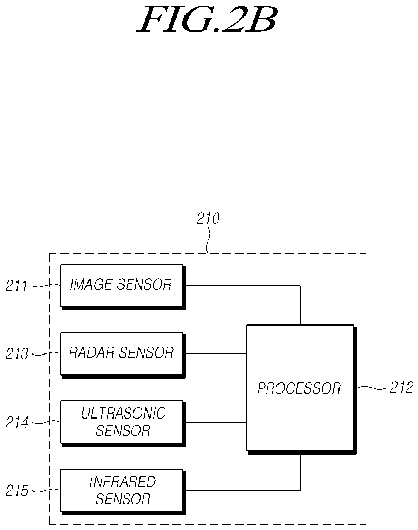

Referring to FIG. 2B, according to an example of the invention of the present disclosure, the detection unit 210 may further include at least one of a radar sensor 213, an ultrasonic sensor 214, and an infrared sensor 215, as well as an image sensor 211. However, this is merely an example, and the preset invention is not limited thereto. The detection unit 210 may detect the driving condition of the vehicle through all apparatuses capable of detecting even blind spots.

A radar sensor or a radar system used herein may include at least one radar sensor unit, for example, one or more of a front detection radar installed at the front of the vehicle, a rear radar sensor installed at the rear of the vehicle, and a lateral side or a rear lateral side detection radar sensor installed at each lateral side of the vehicle. The radar sensor or radar system may analyze transmission (Tx) signals and reception (Rx) signals to process data, and thus may detect information regarding an object. To this end, the radar sensor or radar system may include an electronic control unit (ECU) or a processor. Data transmission or signal communication from the radar sensor to the ECU may use an appropriate communication link such as a vehicle network bus.

The radar sensor includes one or more Tx antennas for transmitting radar signals and one or more RX antennas for receiving reflected signals received from an object.

Meanwhile, the radar sensor according to this embodiment may employ a multi-dimensional antenna arrangement and a multiple-input multiple-output (MIMO) signal transmission/reception scheme in order to form a virtual antenna aperture greater than an actual antenna aperture.

For example, a two-dimensional (2D) antenna array is used to achieve horizontal and vertical angular precision and resolution. When a 2D radar antenna array is used, signals are transmitted or received by two (time-multiplexed) individual scans that are horizontally and vertically performed. MIMO may be used separately from the horizontal and vertical (time-multiplexed) 2D radar scans.

In detail, the radar sensor according to this embodiment may employ a 2D antenna array composed of a Tx antenna unit including a total of 12 Tx antennas and a Rx antenna unit including a total of 16 Rx antennas. As a result, the radar sensor may have an arrangement of 192 virtual Rx antennas in total.

In this case, the Tx antenna unit may have three Tx antenna groups each including four Tx antennas. A first Tx antenna group may be vertically separated a certain distance from a second Tx antenna group. The first or second Tx antenna group may be horizontally separated a certain distance D from a third Tx antenna group.

Also, the Rx antenna unit may include four Rx antenna groups each including four Rx antennas. The Rx antenna groups are vertically spaced from one another. The Rx antenna unit may be disposed between the first Tx antenna group and the third Tx antenna group that are horizontally spaced from each other.

Also, according to another embodiment, the antennas of the radar sensor may be arranged as a 2D antenna array. As an example, each antenna patch has a Rhombic lattice arrangement, and thus it is possible to reduce an unnecessary side lobe.

Alternatively, the 2D antenna arrangement may include a V-shaped antenna array in which multiple radiation patches are arranged in the shape of the letter V. In detail, the 2D antenna arrangement may include two V-shaped antenna arrays. In this case, a single feed is made to the apex of each V-shaped antenna array.

Alternatively, the 2D antenna arrangement may include an X-shaped antenna array in which multiple radiation patches are arranged in the shape of the letter X. In detail, the 2D antenna arrangement may include two X-shaped antenna arrays. In this case, a single feed is made to the center of each X-shaped antenna array.

Also, the radar sensor according to this embodiment may use a MIMO antenna system in order to implement vertical and horizontal detection accuracy or resolution.

In detail, the Tx antennas in the MIMO system may transmit signals having independent waveforms distinguished from each other. That is, each Tx antenna may transmit a signal having an independent waveform which is distinguished from those of the other Tx antennas, and each Rx antenna may determine from which Tx antenna a reflection signal reflected from an object is transmitted due to the different waveforms of the signals.

Also, the radar sensor according to this embodiment may include a radar housing configured to accommodate a circuit and a substrate including a Tx antenna and a Rx antenna and include a radome configured to form the external appearance of the radar housing. In this case, the radome may be made of a material capable of reducing attenuation of transmitted or received radar signals and may be provided as a front or rear bumper, a grille, or a lateral body of a vehicle or an external surface of a vehicular component.

That is, the radome of the radar sensor may be disposed inside the grille, bumper, or body of the vehicle, and may be disposed as a portion of the components constituting the external surface of the vehicle, such as the grille, the bumper, and a part of the body of the vehicle. Thus, it is possible to provide convenience in installing the radar sensor as well as to improve vehicle aesthetics.

An ultrasonic sensor may include an ultrasonic transmission unit, a reception unit, and a processor. The ultrasonic sensor may detect an object on the basis of transmitted ultrasonic waves and may detect a relative speed and a distance from the detected object. When the object is a stationary object (e.g., a street tree, a street light, a traffic light, a traffic sign, etc.), the ultrasonic sensor may detect a driving speed of a vehicle on the basis of a time of flight (TOF) due to the object.

Also, by installing a camera device such as a rear view camera at left and right side mirrors of the vehicle, the detection unit 210 may capture a rear lateral region with respect to the vehicle and may detect the driving condition of the vehicle by means of a camera of an around-view monitoring (AVM) system.

In this case, the driving condition may include the location of an obstacle near the vehicle, a distance from another vehicle, and a relative speed.

In addition, the detection unit 210 functions to detect the driving state of the vehicle. The driving state of the vehicle may include a driving speed, a driving direction, location information, and the like of the vehicle and may be received through the communication unit 240 from a driving support system including a Global Positioning System (GPS) device, an acceleration sensor, or a LDWS & LKAS 23, a smart cruise control (SCC) 21, a smart parking assist system (SPAS) 22, and the like.

Also, the detection unit 210 may further perform a function of identifying a driver who drives the vehicle. To this end, the detection unit 210 may further include a biometric information recognition device such as a fingerprint sensor, a face recognition sensor, an iris recognition sensor, and a voice recognition sensor. The detection unit 210 may detect the driver identification information through at least one of the biometric information recognition devices.

That is, the detection unit 210 may include various kinds of sensors installed in the vehicle and may receive detected information from the various sensors and the driving support system through the communication unit 240.

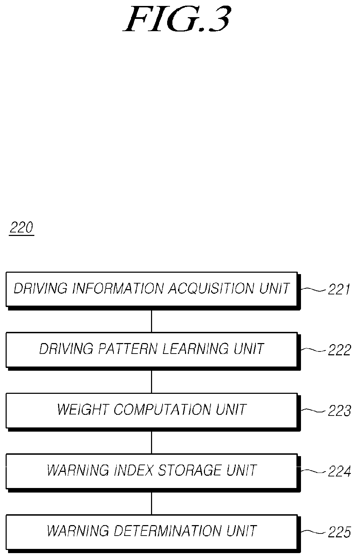

Typically, the control unit 220 may control overall operation of the rear lateral side warning apparatus 200. According to an example, the control unit 220 may be implemented as an ECU. The control unit 220 may receive a result of processing image data from the processor. The control unit 220 may determine whether to generate a warning signal depending on a driver's driving pattern, at least partially on the basis of processing of the image data. The control unit 220 will be described below in detail with reference to FIG. 3.

The output unit 230 outputs the warning signal on the basis of a result of the determination of the control unit 220. The warning signal indicates a warning against the rear lateral side warning system, that is, at least one of BSD information, LCA information, and RPC information.

In this case, the output unit 230 may be implemented as at least one of a voice module, a vibration module, and an image module to output the warning signal. For example, the output unit 230 may include a speaker configured to output a warning alarm to warn about an accident risk during a lane change, a warning light installed at a vehicle dashboard and configured to turn on or blink, a head-up display device configured to display a warning image or character on a vehicle windshield, a display device equipped with a navigation function having a screen on which a host vehicle and other vehicles, and a haptic module installed at a vehicle steering wheel, sheet, or accelerator pedal to generate vibration.

Also, the output unit 230 may generate and output a driving control signal corresponding to the warning signal in order to control the driving of the vehicle, and the driving control signal may be transmitted to the driving support system including the LDWS & LKAS 23, the SCC 21, the SPAS 22, and the like.

For example, for a warning situation in which an obstacle is detected within a certain distance from the rear lateral region with respect to the vehicle, the output unit 230 may generate a warning sound for BSD and provide the sound to a driver or may output the warning signal through an operation of replaying an information comment for informing about the risk of collision with the obstacle, and may transmit the driving control signal corresponding to the warning signal to the driving support system. Then, the driving support system may control the steering wheel, the transmission, and the braking device of the vehicle such that the vehicle avoids the obstacle.

The communication unit 240 may transmit the information detected by the various kinds of sensors and the driving support system to the detection unit 210 and may transmit the warning signal or the driving control signal received from the output unit 230 to the driving support system such as the LDWS & LKAS 23.

In this case, the communication unit 240 may be provided as Integrated Services Digital Network (ISDN) including the Internet, Asymmetric Digital Subscriber Line (ADSL), Local Area Network (LAN), the Ethernet, Controller Area Network (CAN), a TCP/IP-based communication network, an optical communication network, a wireless communication network including a mobile communication network such as Code-Division Multiple Access (CDMA) and Wideband Code Division Multiple Access (WCDMA), or a short-range communication network such as ZigBee and Bluetooth.

FIG. 3 is a block diagram showing the control unit 220 of the rear lateral side warning apparatus 200 according to an embodiment of the invention of the present disclosure.

The control unit 220 includes a driving information acquisition unit 221 configured to receive information detected by the detection unit and the driving information and configured to recognize or register the vehicle's driver, a driving pattern learning unit 222 configured to classify the driving pattern on a driver basis and learn the driving pattern on the basis of the driving information, a weight computation unit 223 configured to calculate the warning index by multiplying a predetermined weight to the driving information, a warning index storage unit 224 configured to classify and store the warning index on a driver basis and configured to store a warning situation index set for each warning situation, and a warning determination unit 225 configured to compare the warning index to the warning situation index, generate the warning signal, and transmit the warning signal to the output unit.

In this case, the driving information may include at least one of lane departure information and partial brake control information accumulated in the vehicle, in addition to blind spot warnings, lane change warnings, or rear-end collision warnings which are accumulated in the vehicle, but the present invention is not limited thereto.

Accordingly, the driving information may be information regarding operation of a turn signal installed in the vehicle or information regarding operation accumulated by a pedal operation detection sensor, a multi-function operation detection sensor, and the like. That is, the driving information may be information regarding whether a driver operates at least one of an accelerator pedal, a brake pedal, and a steering wheel.

That is, the driving information may be received from the various kinds of sensors and the driving support system through the detection unit 210 and the communication unit 240.

In detail, the driving information acquisition unit 221 of the control unit 220 receives a driving condition of the vehicle, a driving state of the vehicle, the driver identification information, and the driving information received from the detection unit 210 and authenticates or registers the driver using the driver identification information. The control unit 220 may authenticate or register the vehicle's driver by comparing the detected driver identification information to prestored identification information.

That is, even when several drivers are registered for the vehicle, the driving information acquisition unit 221 may recognize a driver who is currently driving the vehicle through the driver identification information and may output a rear lateral side warning according to the driver's driving pattern. Alternatively, by registering a new driver in the driving information acquisition unit 221 through new driver identification information, the driving information acquisition unit 221 may learn the new driver's driving pattern.

The driving pattern learning unit 222 of the control unit 220 learns the driving information received from the driving information acquisition unit 221. That is, the driving pattern learning unit 222, which is composed of one or more microprocessors that are operated by a predetermined program or is a hardware device including the microprocessors, may be formed of a series of commands for performing operation of the rear lateral side warning apparatus 200 according to the driver's driving pattern.

Accordingly, when the driving information acquisition unit 221 recognizes the vehicle's driver and transmits information regarding the driver to the driving pattern learning unit 222, the driving pattern learning unit 222 may learn the driving pattern on the basis of the driving information accumulated for a certain period while the driver is driving the vehicle. In this case, the driving information is classified on a driver basis and is used to learn the driving pattern. When a new driver is registered, an average of prestored driving patterns of drivers may be extracted and replaced for a driving pattern of the new driver.

The weight computation unit 223 of the control unit 220 calculates the warning index by multiplying a predetermined weight to the driving information learned by the driving pattern learning unit 222. The weight computation unit 223 obtains the warning index by adding values obtained by multiplexing the predetermined weight to individual pieces of the driving information, as shown in the following equation:

$$\text{Warning index} = (W_b*N_A) + (W_l*N_B) + (W_r*N_C) \text{ or Warning}$$

$$\text{index} = (W_b*N_A) + (W_l*N_B) + (W_b*N_D) + (W_L*N_E)$$

Here, N is learned driving information, and W denotes a weight. $N_A$ is the number or level of BSD warnings, $W_b$ is a weight for the BSD warnings, $N_B$ is the number or level of LCA warnings, $W_l$ is a weight for the LCA warnings, $N_C$ is the number or level of RPC warnings, and $W_r$ is a weight for the RPC warnings. According to an example, the number of warnings may denote the number of times a warning is issued when a driver tries to change the lane while there is a collision risk during the lane change. That is, when the number of warnings for a collision risk is large, it may be determined that the driver is exposed many times to dangerous situations. Thus, there is a need to issue a more sensitive warning.

Also, $N_E$ is the number of operations of LDWS & LKAS, $W_L$ is a weight for the LDWS & LKAS, $N_D$ is the number of partial brakes caused by BSD, and $W_B$ is a weight for the partial brakes caused by the BSD.

In this case, different weights are assigned to drivers according to the learned driving information. For example, driver A may increase the proportion of the weight $W_L$ for the LDWS & LKAS when the number of operations of the LDWS & LKAS is relatively large while driver A is driving the vehicle, and driver B may increase the proportion of the weight $W_b$ for the BSD warnings when the number of BSD warnings is large while driver B is driving the vehicle or when driver B steers the vehicle in sensitive response to the BSD warnings.

That is, as described above, different weights are assigned to drivers, and thus different warning indices are calculated for the drivers. Accordingly, it is possible to control operation of the rear lateral side warning apparatus 200 adaptively depending on the driving pattern of the vehicle's driver.

In this case, the weight computation unit 223 changes the weight on the basis of the warning signal output from the output unit 230. That is, a predetermined weight may be changed through a feedback process in which the driving control signal or the warning signal output from the output unit 230 is transmitted to the driving pattern learning unit 222 and is additionally learned. Accordingly, since the driving pattern of the driver is updated, it is possible to improve the accuracy of the rear lateral side warning apparatus 200.

In the following Table 1, the calculated warning indices are classified into high, medium, and low levels, and example operations of the rear lateral side warning apparatus 200 corresponding to the warning indices are shown.

[Table 1]

| Warning Index Driving Control | High | Medium | Low |
|---|---|---|---|
| BSD Warning Region | Low | Medium | High |
| BSD partial brake control amount | Low | Medium | High |
| Expected Time for LCA Collision | Short | Middle | Long |

As shown in Table 1, when the warning index of the driver belongs to category High, it may be determined that the driver sensitively responds to a rear lateral side warning. Therefore, by forming the BSD region to the minimum extent, minimizing the amount of partial brake control due to the BSD, and setting an expected collision time caused by the LCA to be relative short, the output of the rear lateral side warning apparatus 200 may be controlled according to the condition.

On the other hand, when the warning index of the driver belongs to category Low, it may be determined that the driver insensitively responds to a rear lateral side warning. Therefore, by forming the BSD region to the maximum extent, maximizing the amount of partial brake control due to the BSD, and setting an expected collision time caused by the LCA to be relative long, the output of the rear lateral side warning apparatus 200 may be controlled according to the condition.

Also, the warning determination unit 225 of the control unit 220 may receive information regarding a real-time driving condition and driving state of the vehicle from the detection unit 210 and may determine a warning situation using the received information. Here, the warning situation may refer to a situation in which a conventional rear lateral side warning apparatus can issue a warning, for example, a situation in which an obstacle is detected within a certain distance from the rear lateral region with respect to the vehicle.

The warning determination unit 225 may extract a warning situation index corresponding to the warning situation from the warning index storage unit 224 and compare the extracted warning situation index to the warning index calculated by the weight computation unit 223. In this case, when the warning index is greater than or equal to the warning situation index, the warning determination unit 225 may generate the warning signal, and the warning signal may be transmitted to the output unit 230.

In this case, the calculated warning index and the warning situation index may be transmitted to the warning index storage unit 224 of the control unit 220 and stored on a driver basis. Thus, when the rear lateral side warning apparatus 200 is operated, the warning index corresponding to the driving information or the warning situation index corresponding to the real-time driving condition and driving state of the vehicle is easily extracted and used.

As described above, the invention of the present disclosure provides the rear lateral side warning apparatus 200 for controlling a rear lateral side warning adaptively depending on drivers by calculating the warning indices in consideration of the drivers' patterns.

The rear lateral side warning apparatus according to the invention of the present disclosure includes a detection unit including an image sensor disposed in a vehicle to provide visibility to the outside of the vehicle and configured to capture image data, a domain control unit (DCU) 30 configured to process the image data captured by the image sensor, determine whether to generate a warning signal according to a driver's driving pattern at least partially on the basis of the processing of the image data, and control at least one driver assistance system included in the vehicle, and an output unit configured to output a warning signal against at least one of a bind spot, a lane change, and a rear-end collision of the vehicle.

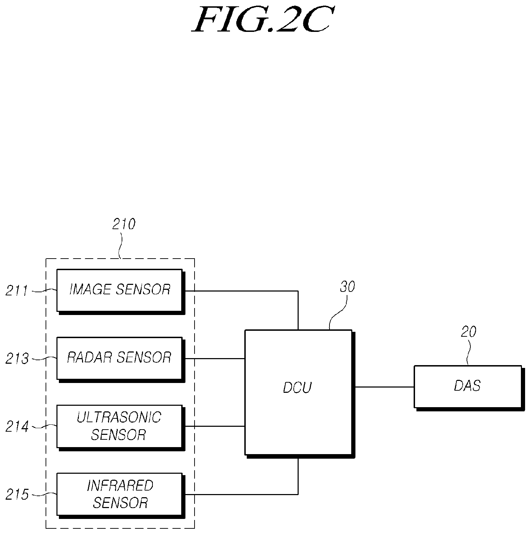

Referring to FIG. 2C, according to an embodiment, the processor for processing the image data, the control unit, and controllers of various apparatuses provided in the vehicle may be integrated as a single component and may be implemented as the DCU 30. In this case, the DCU 30 may generate various vehicle control signals and may control a driver assistance system (DAS) 20 included in the vehicle, various associated apparatuses of the vehicle, and the like. Also, according to an example, the output unit and the communication unit described with reference to FIG. 2A may be incorporated and implemented in the DCU 30.

The DCU 30 may learn a driving pattern on the basis of driving information regarding at least one of blind spot warnings, lane change warnings, and rear-end collision warnings which are accumulated in the vehicle, calculate a warning index obtained by assigning a weight to the driving information, and determine whether to generate a warning signal using the warning index. To this end, the DCU 30 may include at least one processor.

The DCU 30 may be provided in the vehicle to communicate with at least one image sensor installed in the vehicle and at least one non-image sensor such as a radar sensor or an ultrasonic sensor. For this, an appropriate data link or communication link such as a vehicle network bus for data transmission or signal transmission may be further included.

The DCU 30 may be operable to control one or more driver assistance systems (DASs) used in the vehicle. Based on sensing data captured by a plurality of non-image sensors and image data captured by the image sensor, the DCU 30 may integrally control the DASs such as a BSD system, an adaptive cruise control (ACC) system, an LDWS, an LKAS, a lane change assist system (LCAS), and the like.

The DCU 30 may receive the driving information and information detected by the detection unit, recognize or register the vehicle's driver, classify the driving pattern on a driver basis, learn the driving pattern on the basis of the driving information, calculate the warning index by multiplying a predetermined weight to the driving information, classify and store the warning index on a driver basis, store a warning situation index set for each warning situation, compare the warning index to the warning situation index, generate a warning signal, and transmit the warning signal to the output unit.

The driving information may be received from various kinds of sensors and the driving support system through the detection unit 210 and the communication unit 240.

In detail, the DCU 30 receives the driving condition of the vehicle, the driving state of the vehicle, the identification information of the driver, and the driving information received from the detection unit 210 and authenticates or registers the driver using the driver identification information.

That is, even when several drivers are registered for the vehicle, the DCU 30 may recognize a driver who is currently driving the vehicle through the driver identification information and may output a rear lateral side warning according to the driver's driving pattern. Alternatively, by registering a new driver through new driver identification information, the DCU 30 may learn the new driver's driving pattern.

The DCU 30 learns the driving information. That is, the DCU 30, which is composed of one or more microprocessors that are operated by a predetermined program or is a hardware device including the microprocessors, may be formed of a series of commands for performing operation of the rear lateral side warning apparatus 200 according to the driver's driving pattern.

Accordingly, when the vehicle's driver is recognized and the driver information is acquired, the DCU 30 may learn the driving pattern on the basis of the driving information accumulated for a certain period while the driver is driving the vehicle. In this case, the driving information is classified on a driver basis and is used to learn the driving pattern. When a new driver is registered, an average of prestored driving patterns of drivers may be extracted and replaced for a driving pattern of the new driver.

The DCU 30 calculates the warning index by multiplying a predetermined weight to the learned driving information. The DCU 30 may obtain the warning index by adding values obtained by multiplexing the predetermined weight to individual pieces of the driving information, as shown in the following equation:

$$\text{Warning index} = (W_b * N_A) + (W_l * N_B) + (W_r * N_C), \text{ or Warning}$$

$$\text{index} = (W_b * N_A) + (W_l * N_B) + (W_B * N_D) + (W_L * N_E).$$

Here, N is learned driving information, and W denotes a weight. For example, $N_A$ is the number or level of BSD warnings, $W_b$ is a weight for the BSD warnings, $N_B$ is the number or level of LCA warnings, $W_l$ is a weight for the LCA warnings, $N_C$ is the number or level of RPC warnings, and $W_r$ is a weight for the RPC warnings. Also, $N_E$ is the number of operations of LDWS & LKAS, $W_L$ is a weight for the LDWS & LKAS, $N_D$ is the number of partial brakes caused by BSD, and $W_B$ is a weight for the partial brakes caused by the BSD.

In this case, different weights are assigned to drivers according to the learned driving information. For example, driver A may increase the proportion of the weight $W_L$ for the LDWS & LKAS when the number of operations of the LDWS & LKAS is relatively large while driver A is driving the vehicle, and driver B may increase the proportion of the weight $W_b$ for the BSD warnings when the number of BSD warnings is large while driver B is driving the vehicle or when driver B steers the vehicle in sensitive response to the BSD warnings.

That is, as described above, different weights may be assigned to drivers, and thus different warning indices may be calculated for the drivers. Accordingly, it is possible to control operation of the rear lateral side warning apparatus 200 adaptively depending on the driving pattern of the vehicle's driver.

In this case, the DCU 30 may change the weight on the basis of the warning signal output from the output unit 230. That is, a predetermined weight may be changed through a feedback process in which the DCU 30 additionally learns a driving control signal or the warning signal output from the output unit 230. Accordingly, since the driving pattern of the driver is updated, it is possible to improve the accuracy of the rear lateral side warning apparatus 200.

Also, the DCU 30 receives information regarding a real-time driving condition and driving state of the vehicle from the detection unit 210 and determines a warning situation using the received information. Here, the warning situation refers to a situation in which a conventional rear lateral side warning apparatus can issue a warning, for example, a situation in which an obstacle is detected within a certain distance from the rear lateral region with respect to the vehicle.

The DCU 30 may extract a warning situation index corresponding to the warning situation and compares the extracted warning situation index to the calculated warning index. In this case, when the warning index is greater than or equal to the warning situation index, the DCU 30 may generate a warning signal, and the warning signal may be transmitted to the output unit 230.

In this case, the calculated warning index and the warning situation index are stored on a driver basis. Thus, when the rear lateral side warning apparatus 200 is operated, the warning index corresponding to the driving information or the warning situation index corresponding to the real-time driving condition and driving state of the vehicle may be easily extracted and used.

As described above, the present disclosure provides the rear lateral side warning apparatus 200 for controlling a rear lateral side warning adaptively depending on drivers by calculating the warning indices in consideration of the drivers' patterns.

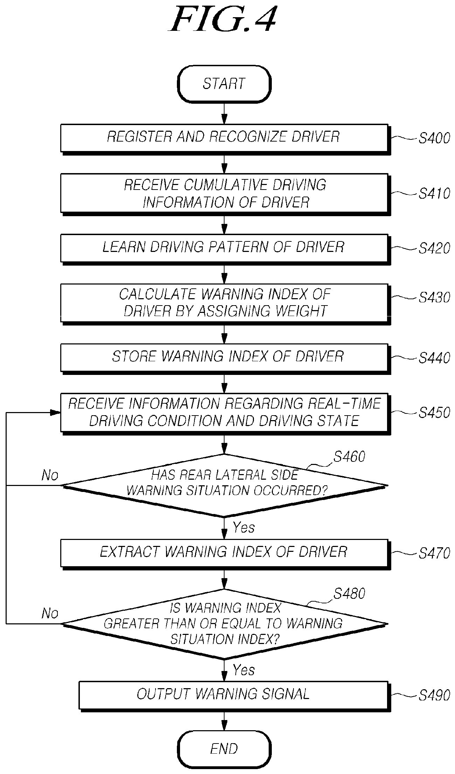

FIG. 4 is a flowchart illustrating a rear lateral side warning method according to an embodiment of the invention of the present disclosure. The following description is based on the control unit, but the present invention is not limited thereto. The following description with respect to the operation of the control unit may be applied to the DCU in substantially the same way, except for a case in which the description is not applicable.

The rear lateral side warning method according to the invention of the present disclosure includes a detection step of detecting a driving condition of a vehicle and a driving state of the vehicle, a control step of learning a driving pattern on the basis of driving information regarding at least one of blind spot warnings, lane change warnings, and rear-end collision warnings which are accumulated in the vehicle, calculating a warning index obtained by assigning a weight to the driving information, and determining whether to generate a warning signal using the warning index, and an output step of outputting the warning signal against at least one of a bind spot, a lane change, and a rear-end collision of the vehicle.

The control step includes a driving information acquisition step of receiving the driving information and information detected in the detection step and recognizing or registering the vehicle's driver, a driving pattern learning step of classifying the driving pattern on a driver basis and learning the driving pattern on the basis of the driving information, a weight computation step of calculating the warning index by multiplying a predetermined weight to the driving information, a warning index storage step of classifying and storing the warning index on a driver basis and storing a warning situation index set for each warning situation, and a warning determination step of comparing the warning index to the warning situation index and generating the warning signal.

Referring to FIG. 4, in the driving information acquisition step, a driver who is currently driving the vehicle is recognized or a new driver is registered through driver identification information regarding drivers registered in the vehicle (S400).

Also, the driving information regarding at least one of blind spot warnings, lane change warnings, and rear-end collision warnings which are accumulated during a certain period while the driver is driving the vehicle is received (S410).

Also, in the driving pattern learning step, a driving pattern is learned on a driver basis on the basis of the driving information (S420).

Also, in the weight computation step, the warning index is calculated by multiplying the predetermined weight to the driving information learned by the driving pattern learning unit 222 (S430).

In this case, the warning index is obtained by adding values obtained by multiplying a predetermined weight to individual pieces of the driving information, as shown in the following equation:

$$\texttt{Warning index = } (W_b {}^* N_A) \texttt{ + } (W_l {}^* N_B) \texttt{ + } (W_r {}^* N_C) \texttt{, or Warning}$$

$$\texttt{index = } (W_b {}^* N_A) \texttt{ + } (W_l {}^* N_B) \texttt{ + } (W_B {}^* N_D) \texttt{ + } (W_L {}^* N_E) \texttt{.}$$

Here, N is learned driving information, and W denotes a weight.

Also, in the warning index storage step, the calculated warning index of the driver is stored (S440).

In this case, information regarding a real-time driving condition and driving state of the vehicle is received, and whether the warning situation has occurred is determined using the received information (S460).

Also, the warning situation index of the driver is extracted when it is determined that a rear lateral side warning situation has occurred (S470).

According to the invention of the present disclosure as described above, a warning is controlled according to a driver's driving pattern, and thus it is possible to provide convenience to the driver.

Also, a user is stably informed of a rear lateral side warning, and thus it is possible to prevent an accident.

Even though all of the components of the above-described embodiments of the invention of the present disclosure have been described as being combined into a single component or as operating in combination, the invention of the present disclosure is not necessarily limited to these embodiments. In other words, within the scope of the invention of the present disclosure, all the elements may selectively combine into one or more elements to operate.

The above description is just for the purpose of illustratively describing embodiments of the present invention, and various modifications and changes may be made to the embodiments by those skilled in the art without departing from the scope of the appended claims.

**Claims**

1. A rear lateral side warning apparatus (200) configured to issue a warning in a warning situation in which an obstacle is detected within a certain distance from a rear lateral region with respect to a vehicle, the rear lateral side warning apparatus (200) comprising:

   a detection unit (210) configured to detect a driving condition of the vehicle and a driving state of the vehicle, the detection unit (210) including an image sensor (211) disposed in the vehicle to have visibility to an outside of the vehicle and configured to capture image data and a processor (212) configured to process the image data captured by the image sensor (211);
   a control unit (220) configured to determine whether to generate a warning signal according to a driver's driving pattern, at least partially by using the processing of the image data; and
   an output unit (230) configured to output the warning signal, wherein the warning signal indicates at least one of a blind spot warning, a lane change warning, and a rear-end collision warning of the vehicle,

wherein the control unit (220) is configured to learn the driving pattern by using driving information regarding the blind spot warning, the lane change warning, and the rear-end collision warning which is accumulated in the vehicle, to calculate a warning index obtained by assigning a weight to the driving information, and to determine whether to generate the warning signal using the warning index,

wherein the control unit is configured to calculate the warning index by at least one of the following equations 1 and 2:

[Equation 1]

$$\text{Warning index} = (W_b * N_A) + (W_l * N_B) + (W_r * N_C)$$

[Equation 2]

$$\text{Warning index} = (W_b * N_A) + (W_l * N_B) + (W_b * N_D) + (W_L * N_E),$$

where $N_A$ is the number or level of blind spot warnings, $W_b$ is a weight for the blind spot warnings, $N_B$ is the number or level of lane change warnings, $W_l$ is a weight for the lane change warnings, $N_C$ is the number or level of the rear-end collision warnings, $W_r$ is a weight for the rear-end collision warnings, $N_E$ is the number of operations of a lane departure warning system or a lane keeping assistance system, $W_L$ is a weight for the lane departure warning system or a lane keeping assistance system, $N_D$ is the number of partial brakes caused by the blind spot warnings, and $W_B$ is a weight for the partial brakes caused by the blind spot warnings,

wherein the control unit is configured to generate the warning signal by comparing the warning index to a warning situation index which is set for each warning situation, wherein the warning situation index corresponds to the driving condition and the driving state of the vehicle;

wherein the control unit (220) comprises:

a driving information acquisition unit (221) configured to receive the driving information and detected information from the detection unit (210) and configured to recognize or register the vehicle's driver;
a driving pattern learning unit (222) configured to classify the driving pattern on a driver basis and learn the driving pattern by using the driving information;
a weight computation unit (223) configured to calculate the warning index by multiplying a predetermined weight to the driving information;
a warning index storage unit (224) configured to classify and store the warning index on a driver basis and configured to store the warning situation index set for each warning situation; and
a warning determination unit (225) configured to compare the warning index to the warning situation index, generate the warning signal, and transmit the warning signal to the output unit (230).

2. The rear lateral side warning apparatus (200) of claim 1, further comprising a communication unit (240) configured to receive the driving information and driver identification information from a sensor installed in the vehicle and transmit the warning signal to a control device of the vehicle.

3. The rear lateral side warning apparatus (200) of any of the previous claims, wherein the driving information includes at least one of lane departure information and partial-brake control information accumulated in the vehicle.

4. The rear lateral side warning apparatus (200) any of claims 1 to 3, wherein the warning determination unit (225) is configured to generate the warning signal when the warning index is greater than or equal to the warning situation index.

5. The rear lateral side warning apparatus (200) of any of the previous claims, wherein the output unit (230) is configured to generate and output a driving control signal corresponding to the warning signal in order to control the driving of the vehicle.

6. A rear lateral side warning method for issuing a warning in a warning situation in which an obstacle is detected within a certain distance from a rear lateral region with respect to a vehicle, the rear lateral side warning method comprising:

a detection operation of detecting a driving condition of the vehicle and a driving state of the vehicle, wherein the detection operation comprises capturing image data using an image sensor (211) disposed in the vehicle to have visibility to an outside of the vehicle and processing the captured image data;
a control operation of learning (S420) a driving pattern by using driving information regarding at least one of a blind spot warning, a lane change warning, and a rear-end collision warning of the vehicle which is accumulated (S410) in the vehicle, calculating (S430) a warning index obtained by assigning a predetermined weight to the driving information, and determining whether to generate a warning signal according to a driver's driving pattern, at least partially by using the processing of the image data and the warning index; and
an output operation of outputting (S490) the warning signal, wherein the warning signal indicates the warning, wherein the warning index is calculated by at least one of the following equations 1 and 2:

[Equation 1]

$$\text{Warning index} = (W_b * N_A) + (W_l * N_B) + (W_r * N_C)$$

[Equation 2]

$$\text{Warning index} = (W_b * N_A) + (W_l * N_B) + (W_b * N_D) + (W_L * N_E),$$

where $N_A$ is the number or level of the blind spot warnings, $W_b$ is a weight for the blind spot warnings, $N_B$ is the number or level of the lane change warnings, $W_l$ is a weight for the lane change warnings, $N_C$ is the number or level of the rear-end collision warnings, $W_r$ is a weight for the rear-end collision warnings, $N_E$ is the number of operations of a lane departure warning system or a lane keeping assistance system, $W_L$ is a weight for the lane departure warning system or a lane keeping assistance system, $N_D$ is the number of partial brakes caused by the blind spot warnings, and $W_B$ is a weight for the partial brakes caused by the blind spot warnings,
wherein the warning signal is generated by comparing (S480) the warning index to a warning situation index which is set for each warning situation;
wherein the warning situation index corresponds to the driving condition and the driving state of the vehicle;
wherein the method further comprises:

a driving information acquisition operation of receiving (S450) the driving information and detected information and recognizing or registering (S400) the vehicle's driver;
a warning index storage operation (S440) of classifying and storing the warning index on a driver basis and storing the warning situation index set for each warning situation; and 2. upon detecting that the warning index is greater than or equal to the warning situation index, generating the warning signal, and transmitting the warning signal to the output unit (230).

**Patentansprüche**

1.  Hintere seitliche Warnvorrichtung (200), die eingerichtet ist, eine Warnung in einer Warnsituation auszugeben, in der ein Hindernis innerhalb eines bestimmten Abstands von einem hinteren seitlichen Bereich in Bezug auf ein Fahrzeug erfasst wird, wobei die hintere seitliche Warnvorrichtung (200) umfasst:

    eine Erfassungseinheit (210), die eingerichtet ist, eine Fahrbedingung des Fahrzeugs und einen Fahrzustand des Fahrzeugs zu erfassen, wobei die Erfassungseinheit (210) einen Bildsensor (211), der in dem Fahrzeug so angeordnet ist, dass er eine Sicht auf die Außenseite des Fahrzeugs hat, und eingerichtet ist, Bilddaten zu erfassen, und einen Prozessor (212), der eingerichtet ist, die von dem Bildsensor (211) erfassten Bilddaten zu verarbeiten, umfasst;
    eine Steuereinheit (220), die eingerichtet ist, zu bestimmen, ob ein Warnsignal entsprechend dem Fahrverhalten eines Fahrers erzeugt werden soll, zumindest teilweise unter Verwendung der Verarbeitung der Bilddaten; und
    eine Ausgabeeinheit (230), die eingerichtet ist, das Warnsignal auszugeben, wobei das Warnsignal mindestens eines von einer Totwinkelwarnung, einer Spurwechselwarnung und einer Auffahrwarnung des Fahrzeugs angibt, wobei die Steuereinheit (220) eingerichtet ist, das Fahrmuster zu lernen, indem sie Fahrinformationen in Bezug auf die Totewinkelwarnung, die Spurwechselwarnung und die Auffahrwarnung verwendet, die in dem Fahrzeug gesammelt werden, um einen Warnindex zu berechnen, der durch Zuweisen einer Gewichtung zu den Fahrinformationen erhalten wird, und um zu bestimmen, ob das Warnsignal unter Verwendung des Warnindex erzeugt werden soll,
    wobei die Steuereinheit eingerichtet ist, den Warnindex mit mindestens einer der folgenden Gleichungen 1 und 2 zu berechnen:

[Gleichung 1]

$$Warnindex = (W_b*N_A) + (W_l*N_B) + (W_r*N_C)$$

[Gleichung 2]

$$Warnindex = (W_b*N_A) + (W_l*N_B) + (W_b*N_D) + (W_L*N_E),$$

wobei $N_A$ die Anzahl oder der Grad von Totwinkelwarnungen ist, $W_b$ eine Gewichtung für die Totwinkelwarnungen ist, $N_B$ die Anzahl oder der Grad von Spurwechselwarnungen ist, $W_l$ eine Gewichtung für die Spurwechselwarnungen ist, $N_C$ die Anzahl oder der Grad der Auffahrwarnungen ist, $W_r$ eine Gewichtung für die Auffahrwarnungen ist, $N_E$ die Anzahl der Betätigungen eines Spurverlassenswarnsystems oder eines Spurhalteassistenzsystems ist, $W_L$ eine Gewichtung für das Spurverlassenswarnsystem oder ein Spurhalteassistenzsystem ist, $N_D$ die Anzahl der durch die Totwinkelwarnungen verursachten Teilbremsungen ist, und $W_B$ eine Gewichtung für die durch die Totwinkelwarnungen verursachten Teilbremsungen ist,
wobei die Steuereinheit eingerichtet ist, das Warnsignal zu erzeugen, indem sie den Warnindex mit einem Warnsituationsindex vergleicht, der für jede Warnsituation festgelegt ist, wobei der Warnsituationsindex der Fahrbedingung und dem Fahrzustand des Fahrzeugs entspricht;
wobei die Steuereinheit (220) umfasst:
eine Fahrinformationserfassungseinheit (221), die eingerichtet ist, die Fahrinformationen und die erfassten Informationen von der Erfassungseinheit (210) zu empfangen, und eingerichtet ist, den Fahrer des Fahrzeugs zu erkennen oder registrieren;
eine Fahrmuster-Lerneinheit (222), die eingerichtet ist, das Fahrmuster auf Pro-Fahrer-Basis zu klassifizieren und das Fahrmuster unter Verwendung der Fahrinformationen zu lernen;
eine Gewichtungsberechnungseinheit (223), die eingerichtet ist, den Warnindex durch Multiplizieren eines vorbestimmten Gewichts mit der Fahrinformation zu berechnen;
eine Warnindex-Speichereinheit (224), die eingerichtet ist, den Warnindex auf Pro-Fahrer-Basis zu klassifizieren und speichern, und die eingerichtet ist, den Warnsituationsindexsatz für jede Warnsituation zu speichern; und
eine Warnbestimmungseinheit (225), die eingerichtet ist, den Warnindex mit dem Warnsituationsindex zu vergleichen, das Warnsignal zu erzeugen und das Warnsignal an die Ausgabeeinheit (230) zu übertragen.

2. Hintere seitliche Warnvorrichtung (200) nach Anspruch 1, ferner umfassend eine Kommunikationseinheit (240), die eingerichtet ist, die Fahrinformationen und die Fahreridentifikationsinformationen von einem im Fahrzeug installierten Sensor zu empfangen und das Warnsignal an eine Steuervorrichtung des Fahrzeugs zu senden.

3. Hintere seitliche Warnvorrichtung (200) nach einem der vorhergehenden Ansprüche, wobei die Fahrinformationen mindestens eine von Informationen über das Verlassen der Fahrspur und Informationen über die Teilbremssteuerung, die im Fahrzeug gespeichert sind, enthalten.

4. Hintere seitliche Warnvorrichtung (200) nach einem der Ansprüche 1 bis 3, wobei die Warnbestimmungseinheit (225) eingerichtet ist, das Warnsignal zu erzeugen, wenn der Warnindex größer als oder gleich dem Warnsituationsindex ist.

5. Hintere seitliche Warnvorrichtung (200) nach einem der vorhergehenden Ansprüche, wobei die Ausgabeeinheit (230) eingerichtet ist, ein dem Warnsignal entsprechendes Fahrsteuersignal zu erzeugen und auszugeben, um das Fahren des Fahrzeugs zu steuern.

6. Hinteres seitliches Warnverfahren zum Ausgeben einer Warnung in einer Warnsituation, in der ein Hindernis innerhalb eines bestimmten Abstands von einem hinteren seitlichen Bereich in Bezug auf ein Fahrzeug erfasst wird, wobei das hintere seitliche Warnverfahren umfasst:

einen Erfassungsvorgang des Erfassens einer Fahrbedingung des Fahrzeugs und eines Fahrzustands des Fahrzeugs, wobei der Erfassungsvorgang das Erfassen von Bilddaten unter Verwendung eines Bildsensors (211), der in dem Fahrzeug angeordnet ist, um eine Sicht auf eine Außenseite des Fahrzeugs zu haben, und das Verarbeiten der erfassten Bilddaten umfasst;
einen Steuervorgang des Lernens (S420) eines Fahrmusters unter Verwendung von Fahrinformationen bezüglich mindestens einer von einer Totwinkelwarnung, einer Spurwechselwarnung und einer Auffahrwarnung des Fahrzeugs, die in dem Fahrzeugs gesammelt (S410) werden, Berechnen (S430) eines Warnindex, der durch Zuweisen einer vorbestimmten Gewichtung zu den Fahrinformationen erhalten wird, und Bestimmen, ob ein Warnsignal gemäß einem Fahrmuster eines Fahrers zu erzeugen ist, zumindest teilweise durch Verwendung der Verarbeitung der Bilddaten und des Warnindex; und

einen Ausgabevorgang zum Ausgeben (S490) des Warnsignals, wobei das Warnsignal die Warnung anzeigt, wobei der Warnindex durch mindestens eine der folgenden Gleichungen 1 und 2 berechnet wird:

[Gleichung 1]

$$\text{Warnindex} = (W_b * N_A) + (W_l * N_B) + (W_r * N_C)$$

[Gleichung 2]

$$\text{Warnindex} = (W_b * N_A) + (W_l * N_B) + (W_b * N_D) + (W_L * N_E),$$

wobei $N_A$ die Anzahl oder der Grad der Totwinkelwarnungen ist, $W_b$ eine Gewichtung für die Totwinkelwarnungen ist, $N_B$ die Anzahl oder der Grad der Spurwechselwarnungen ist, $W_l$ eine Gewichtung für die Spurwechselwarnungen ist, $N_C$ die Anzahl oder der Grad der Auffahrwarnungen ist, $W_r$ eine Gewichtung für die Auffahrwarnungen ist, $N_E$ die Anzahl der Betätigungen eines Spurverlassenswarnsystems oder eines Spurhalteassistenzsystems ist, $W_L$ eine Gewichtung für das Spurverlassenswarnsystem oder ein Spurhalteassistenzsystem ist, $N_D$ die Anzahl der durch die Totwinkelwarnungen verursachten Teilbremsungen ist, und $W_B$ eine Gewichtung für die durch die Totwinkelwarnungen verursachten Teilbremsungen ist,

wobei das Warnsignal durch Vergleich (S480) des Warnindex mit einem Warnsituationsindex erzeugt wird, der für jede Warnsituation festgelegt ist;

wobei der Warnsituationsindex der Fahrbedingung und dem Fahrzustand des Fahrzeugs entspricht;

wobei das Verfahren ferner umfasst:

einen Fahrinformationen-Erfassungsvorgang zum Empfangen (S450) von Fahrinformationen und erfassten Informationen und Erkennen oder Registrieren (S400) des Fahrers des Fahrzeugs;

einen Warnindex-Speichervorgang (S440) zum Klassifizieren und Speichern des Warnindex auf einer Pro-Fahrer-Basis und zum Speichern des Warnsituationsindexsatzes für jede Warnsituation; und

beim Erfassen, dass der Warnindex größer oder gleich dem Warnsituationsindex ist, Erzeugen des Warnsignals und Übertragen des Warnsignals an die Ausgabeeinheit (230).

## Revendications

1. Appareil d'avertissement de côté latéral arrière (200) configuré pour délivrer un avertissement dans une situation d'avertissement dans laquelle un obstacle est détecté à l'intérieur d'une certaine distance par rapport à une région latérale arrière en relation avec un véhicule, l'appareil d'avertissement de côté latéral arrière (200) comprenant :

une unité de détection (210) qui est configurée pour détecter une condition de conduite du véhicule et un état de conduite du véhicule, l'unité de détection (210) incluant un capteur d'image (211) qui est disposé dans le véhicule de telle sorte qu'il dispose d'une visibilité sur un extérieur du véhicule et qui est configuré pour capturer des données d'image et un processeur (212) qui est configuré pour traiter les données d'image qui sont capturées par le capteur d'image (211) ;

une unité de commande (220) qui est configurée pour déterminer si oui ou non il convient de générer un signal d'avertissement en fonction d'un profil de conduite de conducteur, au moins partiellement en utilisant le traitement des données d'image ; et

une unité de sortie (230) qui est configurée pour émettre en sortie le signal d'avertissement, dans lequel le signal d'avertissement indique au moins un avertissement pris parmi un avertissement d'angle mort, un avertissement de changement de voie et un avertissement de collision par l'arrière du véhicule ;

dans lequel l'unité de commande (220) est configurée pour apprendre le profil de conduite en utilisant une information de conduite qui concerne l'avertissement d'angle mort, l'avertissement de changement de voie et l'avertissement de collision par l'arrière, laquelle information de conduite est accumulée dans le véhicule, pour calculer un indice d'avertissement qui est obtenu en attribuant un poids à l'information de conduite, et pour déterminer si oui ou non il convient de générer le signal d'avertissement en utilisant l'indice d'avertissement ; et

dans lequel l'unité de commande est configurée pour calculer l'indice d'avertissement au moyen d'au moins l'une des équations 1 et 2 qui suivent :

[Equation 1]

Indice d'avertissement = $(W_b * N_A) + (W_l * N_B) + (W_r * N_C)$ ;

et

[Equation 2]

Indice d'avertissement = $(W_b * N_A) + (W_l * N_B) + (W_b * N_D) + (W_L * N_E)$,

équations dans lesquelles $N_A$ est le nombre ou le niveau des avertissements d'angle mort, $W_b$ est un poids pour les avertissements d'angle mort, $N_B$ est le nombre ou le niveau des avertissements de changement de voie, $W_l$ est un poids pour les avertissements de changement de voie, $N_C$ est le nombre ou le niveau des avertissements de collision par l'arrière, $W_r$ est un poids pour les avertissements de collision par l'arrière, $N_E$ est le nombre d'opérations d'un système d'avertissement de sortie de voie ou d'un système d'assistance au maintien sur la voie, $W_L$ est un poids pour le système d'avertissement de sortie de voie ou pour le système d'assistance au maintien sur la voie, $N_D$ est le nombre de freinages partiels qui sont provoqués par les avertissements d'angle mort et $W_B$ est un poids pour les freinages partiels qui sont provoqués par les avertissements d'angle mort ;

dans lequel l'unité de commande est configurée pour générer le signal d'avertissement en comparant l'indice d'avertissement à un indice de situation d'avertissement qui est défini pour chaque situation d'avertissement, dans lequel l'indice de situation d'avertissement correspond à la condition de conduite et à l'état de conduite du véhicule ;

dans lequel l'unité de commande (220) comprend :

une unité d'acquisition d'information de conduite (221) qui est configurée pour recevoir l'information de conduite et l'information détectée en provenance de l'unité de détection (210) et qui est configurée pour reconnaître ou pour enregistrer le conducteur du véhicule ;

une unité d'apprentissage de profil de conduite (222) qui est configurée pour classifier le profil de conduite sur une base par conducteur et pour apprendre le profil de conduite en utilisant l'information de conduite ;

une unité de calcul de poids (223) qui est configurée pour calculer l'indice d'avertissement en multipliant un poids prédéterminé par l'information de conduite ;

une unité de stockage d'indice d'avertissement (224) qui est configurée pour classifier et pour stocker l'indice d'avertissement sur une base par conducteur et qui est configurée pour stocker l'indice de situation d'avertissement qui est défini pour chaque situation d'avertissement ; et

une unité de détermination d'avertissement (225) qui est configurée pour comparer l'indice d'avertissement à l'indice de situation d'avertissement, pour générer le signal d'avertissement et pour transmettre le signal d'avertissement à l'unité de sortie (230).

2. Appareil d'avertissement de côté latéral arrière (200) selon la revendication 1, comprenant en outre une unité de communication (240) qui est configurée pour recevoir l'information de conduite et une information d'identification de conducteur en provenance d'un capteur qui est installé dans le véhicule et pour transmettre le signal d'avertissement à un dispositif de commande du véhicule.

3. Appareil d'avertissement de côté latéral arrière (200) selon l'une quelconque des revendications précédentes, dans lequel l'information de conduite inclut au moins une information prise parmi une information de sortie de voie et une information de commande de freinage partiel qui sont accumulées dans le véhicule.

4. Appareil d'avertissement de côté latéral arrière (200) selon l'une quelconque des revendications 1 à 3, dans lequel l'unité de détermination d'avertissement (225) est configurée pour générer le signal d'avertissement lorsque l'indice d'avertissement est supérieur ou égal à l'indice de situation d'avertissement.

5. Appareil d'avertissement de côté latéral arrière (200) selon l'une quelconque des revendications précédentes, dans lequel l'unité de sortie (230) est configurée pour générer et pour émettre en sortie un signal de commande de conduite qui correspond au signal d'avertissement afin de commander la conduite du véhicule.

6.  Procédé d'avertissement de côté latéral arrière pour délivrer un avertissement dans une situation d'avertissement dans laquelle un obstacle est détecté à l'intérieur d'une certaine distance par rapport à une région latérale arrière en relation avec un véhicule, le procédé d'avertissement de côté latéral arrière comprenant :

une opération de détection qui consiste à détecter une condition de conduite du véhicule et un état de conduite du véhicule, dans lequel l'opération de détection comprend la capture de données d'image en utilisant un capteur d'image (211) qui est disposé dans le véhicule de telle sorte qu'il dispose d'une visibilité sur un extérieur du véhicule et le traitement des données d'image capturées ;

une opération de commande qui consiste à apprendre (S420) un profil de conduite en utilisant une information de conduite qui concerne au moins un avertissement pris parmi un avertissement d'angle mort, un avertissement de changement de voie et un avertissement de collision par l'arrière du véhicule, laquelle information de conduite est accumulée (S410) dans le véhicule, à calculer (S430) un indice d'avertissement qui est obtenu en attribuant un poids prédéterminé à l'information de conduite, et à déterminer si oui ou non il convient de générer un signal d'avertissement en fonction d'un profil de conduite de conducteur, au moins partiellement en utilisant le traitement des données d'image et l'indice d'avertissement ; et

une opération de sortie qui consiste à émettre en sortie (S490) le signal d'avertissement ; dans lequel le signal d'avertissement indique l'avertissement ;

dans lequel l'indice d'avertissement est calculé au moyen d'au moins l'une des équations 1 et 2 qui suivent :

[Equation 1]

$$\text{Indice d'avertissement} = (W_b * N_A) + (W_l * N_B) + (W_r * N_C) ;$$

et

[Equation 2]

$$\text{Indice d'avertissement} = (W_b * N_A) + (W_l * N_B) + (W_b * N_D) + (W_L * N_E),$$

équations dans lesquelles $N_A$ est le nombre ou le niveau des avertissements d'angle mort, $W_b$ est un poids pour les avertissements d'angle mort, $N_B$ est le nombre ou le niveau des avertissements de changement de voie, $W_l$ est un poids pour les avertissements de changement de voie, $N_C$ est le nombre ou le niveau des avertissements de collision par l'arrière, $W_r$ est un poids pour les avertissements de collision par l'arrière, $N_E$ est le nombre d'opérations d'un système d'avertissement de sortie de voie ou d'un système d'assistance au maintien sur la voie, $W_L$ est un poids pour le système d'avertissement de sortie de voie ou pour le système d'assistance au maintien sur la voie, $N_D$ est le nombre de freinages partiels qui sont provoqués par les avertissements d'angle mort et $W_B$ est un poids pour les freinages partiels qui sont provoqués par les avertissements d'angle mort ;

dans lequel le signal d'avertissement est généré en comparant (S480) l'indice d'avertissement à un indice de situation d'avertissement qui est défini pour chaque situation d'avertissement ;

dans lequel l'indice de situation d'avertissement correspond à la condition de conduite et à l'état de conduite du véhicule ;

dans lequel le procédé comprend en outre :

une opération d'acquisition d'information de conduite qui consiste à recevoir (S450) l'information de conduite et l'information détectée et à reconnaître ou à enregistrer (S400) le conducteur du véhicule ;

une opération de stockage d'indice d'avertissement (S440) qui consiste à classifier et à stocker l'indice d'avertissement sur une base par conducteur et à stocker l'indice de situation d'avertissement qui est défini pour chaque situation d'avertissement ; et

suite à la détection du fait que l'indice d'avertissement est supérieur ou égal à l'indice de situation d'avertissement, la génération du signal d'avertissement et la transmission du signal d'avertissement à l'unité de sortie (230).

# FIG.1

# FIG.2A

# FIG.2B

# FIG.2C

210

211 — IMAGE SENSOR

213 — RADAR SENSOR

214 — ULTRASONIC SENSOR

215 — INFRARED SENSOR

30

DCU

20

DAS

# FIG.3

220

| |
|---|
| DRIVING INFORMATION ACQUISITION UNIT |

~ 221

| |
|---|
| DRIVING PATTERN LEARNING UNIT |

~ 222

| |
|---|
| WEIGHT COMPUTATION UNIT |

~ 223

| |
|---|
| WARNING INDEX STORAGE UNIT |

~ 224

| |
|---|
| WARNING DETERMINATION UNIT |

~ 225

# FIG.4

START

REGISTER AND RECOGNIZE DRIVER — S400

RECEIVE CUMULATIVE DRIVING INFORMATION OF DRIVER — S410

LEARN DRIVING PATTERN OF DRIVER — S420

CALCULATE WARNING INDEX OF DRIVER BY ASSIGNING WEIGHT — S430

STORE WARNING INDEX OF DRIVER — S440

RECEIVE INFORMATION REGARDING REAL-TIME DRIVING CONDITION AND DRIVING STATE — S450

S460
HAS REAR LATERAL SIDE WARNING SITUATION OCCURRED?
No
Yes

EXTRACT WARNING INDEX OF DRIVER — S470

S480
IS WARNING INDEX GREATER THAN OR EQUAL TO WARNING SITUATION INDEX?
No
Yes

OUTPUT WARNING SIGNAL — S490

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170140513
- US 2013335213 A1
- US 2016009295 A1